# EUROPEAN PATENT APPLICATION

(11) **EP 4 726 252 A1**
(43) Date of publication of application: **15.04.2026**
(21) Application number: 24847537.8
(22) Date of filing: 18.02.2024
(51) Int. Cl.: F21K 9/20, F21S 8/00, F21V 17/16

(54) **INDICATOR LIGHT APPARATUS AND NETWORK COMMUNICATION DEVICE**

(30) Priority: 02.08.2023 CN 202310970368
(71) Applicant: Huawei Technologies Co., Ltd., Shenzhen, Guangdong 518129 (CN)
(72) Inventor: LUO, Chongdan, Shenzhen, Guangdong 518129 (CN); XU, Liang, Shenzhen, Guangdong 518129 (CN); LI, Sheng, Shenzhen, Guangdong 518129 (CN)
(74) Representative: Goddar, Heinz J.
(86) International application number: PCT/CN2024/077399
(87) International publication number: WO 2025/025568

(57) **Abstract**

This application provides an indicator apparatus and a network communication device. The indicator apparatus provided in this application includes a plastic structural part and an indicator board. The plastic structural part is fastened to the indicator board. Specifically, the plastic structural part is a structural part integrally formed by a plurality of light guiding structures and a plastic body, and the plurality of light guiding structures are configured to transmit, to a first surface of the plastic body for emission, light emitted by a plurality of light emitting diodes LEDs on the indicator board. The indicator board includes a printed circuit board PCB, the plurality of LEDs disposed on a first surface of the PCB, and an indicator board base disposed on a second surface of the PCB. The indicator board base is electrically connected to a board by using a cable. A size of the indicator apparatus provided in this application can be flexibly designed based on an application requirement, and a layout of a small-size indicator can be implemented.

## Description

This application claims priority to Chinese Patent Application No. 202310970368.X, filed with the China National Intellectual Property Administration on August 2, 2023 and entitled "INDICATOR APPARATUS AND NETWORK COMMUNICATION DEVICE", which is incorporated herein by reference in its entirety.

### TECHNICAL FIELD

This application relates to the field of optical transport technologies, and more specifically, to an indicator apparatus and a network communication device.

### BACKGROUND

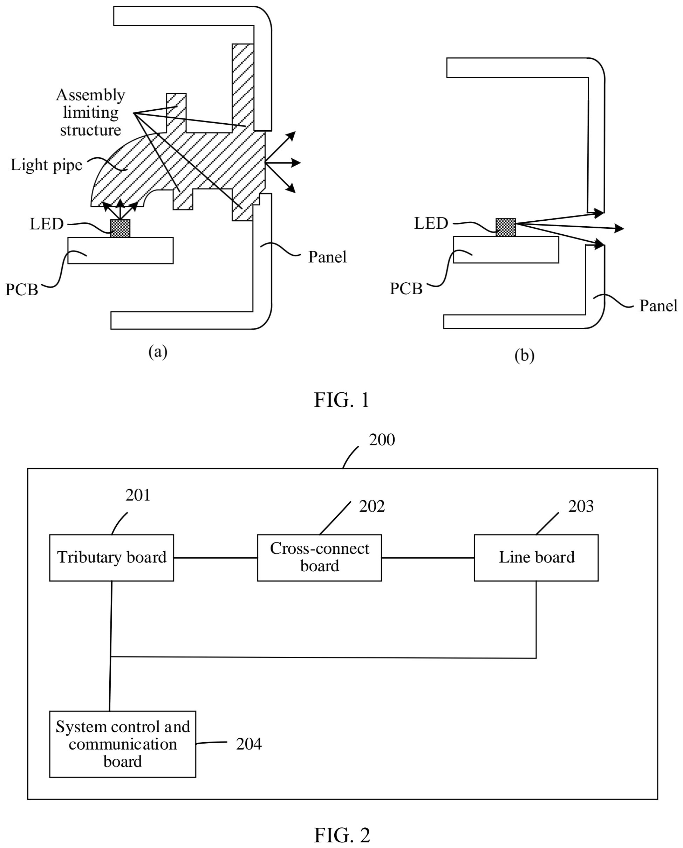

In an optical transport network (optical transport network, OTN) device, a board state can be quickly identified by using a board indicator. Currently, there are mainly two types of light guiding solutions using a board. One type is a solution in which light emitted by a light emitting diode (light emitting diode, LED) is transmitted to a surface of the board by using a light guiding structure (for example, a light pipe), as shown in (a) in FIG. 1. The other type is a solution in which a side-emission LED lamp directly emits light to an observation panel, as shown in (b) in FIG. 1. However, in a solution in which the light pipe emits light, because an LED lamp is disposed on a printed circuit board (printed circuit board, PCB) of the board, the light pipe occupies a part of a PCB layout. In addition, because a specific distance exists between the PCB and an observation panel, the solution has a high requirement on assembly of the light pipe. Usually, assembly limiting structures are disposed at two ends of the light pipe, causing an indicator apparatus to occupy excessively large internal space of the board. In addition, when the board is a high-density board with an optical port, this solution is no longer applicable because a size of space occupied by the indicator apparatus cannot be reduced. In the side-emission solution, because a distance between the LED lamp and the observation panel is limited, a light crosstalk phenomenon easily occurs in this solution. In addition, positions of indicators on various boards are different due to impact of positions of PCBs and optical ports. Therefore, how to implement a small-size indicator apparatus and improve an indication effect of the indicator apparatus is a problem to be urgently resolved.

### SUMMARY

This application provides an indicator apparatus and a network communication device. The indicator apparatus provided in this application has a small size and a good indication effect, so that internal space of the network communication device can be saved, and a uniform position layout can be implemented for panels of a plurality of boards of the device.

According to a first aspect, an embodiment of this application provides an indicator apparatus. The apparatus includes: a plastic structural part and an indicator board. The plastic structural part is fastened to the indicator board. The plastic structural part is a structural part integrally formed by a plurality of light guiding structures and a plastic body, and the plurality of light guiding structures are configured to transmit, to a first surface of the plastic body for emission, light emitted by a plurality of light emitting diodes LEDs on the indicator board. The indicator board includes a printed circuit board PCB, the plurality of LEDs disposed on a first surface of the PCB, and an indicator board base disposed on a second surface of the PCB. The indicator board base is electrically connected to a board by using a cable.

In the indicator apparatus provided in this application, the LED is no longer disposed on a PCB of the board, but a size of the indicator apparatus can be flexibly designed based on a requirement by using an independent indicator board and a plastic structural part that matches the indicator board. In addition, an assembly limiting structure is not used in the indicator apparatus, so that the size of the indicator apparatus can be reduced. In addition, this application can provide a small-size indicator apparatus. Therefore, when the indicator apparatus is used in boards of different models, the indicator apparatus provided in this application may be installed at uniform positions of the boards, and occupies same small space of each board, to implement uniform indicator positions.

With reference to the first aspect, in some implementations of the first aspect, the plurality of light guiding structures are a plurality of through holes. There is a low requirement on processing precision of the plastic structural part when the through hole is provided on the plastic structural part, and processing is easy, so that the solution is easy to be implemented.

With reference to the first aspect, in some implementations of the first aspect, the plurality of light guiding structures are a plurality of hollow structures protruding from the first surface and a second surface of the plastic body. The hollow structure can converge light in a transmission process, so that the light is not easily diffused, thereby improving an indication effect.

With reference to the first aspect, in some implementations of the first aspect, the plurality of light guiding structures are a plurality of light pipes protruding from the first surface and a second surface of the plastic body. Light conduction is implemented by using the light pipe, to improve light conduction efficiency, avoid a light energy loss, and further improve an indication effect.

With reference to the first aspect, in some implementations of the first aspect, the second surface of the plastic body is further formed with a light isolation structure in a protruding shape, the light isolation structure is located between the plurality of light guiding structures, and the light isolation structure is configured to isolate light emitted from the plurality of light pipes. Based on this solution, the light isolation structure is formed on the plastic structural part, to avoid a light crosstalk phenomenon that occurs when a distance between the light pipes is excessively small.

With reference to the first aspect, in some implementations of the first aspect, the plastic structural part is further formed with a plurality of elastic clips protruding toward a second surface of the plastic structural part. That the plastic structural part is fastened to the indicator board includes that the plastic structural part is fastened to the indicator board by using the plurality of elastic clips. Based on this solution, the indicator board can be more easily assembled, stability is improved, and convenient disassembly is implemented.

With reference to the first aspect, in some implementations of the first aspect, a quantity of the plurality of elastic clips is 3, and the plurality of elastic clips are respectively formed on three edges of the plastic body. The three elastic clips are respectively disposed on the three edges of the plastic body, to further improve stability of fastening the plastic structural part to the indicator board.

With reference to the first aspect, in some implementations of the first aspect, the size of the indicator apparatus is less than or equal to 3.2 cm³. In this way, a size occupied by the indicator apparatus in the device can be greatly reduced, thereby saving device space.

With reference to the first aspect, in some implementations of the first aspect, a height of the indicator apparatus is less than or equal to 17.6 mm. The indicator apparatus provided in this application has a small height, so that the size of the indicator apparatus can be effectively reduced.

With reference to the first aspect, in some implementations of the first aspect, the plastic structural part is formed through two-color injection molding. This solution can ensure reliability and process maturity of generating the plastic structural part.

According to a second aspect, an embodiment of this application provides a network communication device. The device includes a board and the indicator apparatus according to any one of the first aspect or the possible implementations of the first aspect. The indicator apparatus is fastened to the board.

With reference to the second aspect, in some implementations of the second aspect, that the indicator apparatus is fastened to the board includes that a first surface of the plastic structural part of the indicator apparatus is fastened to an inner surface of a panel of the board in a sticking manner. The indicator apparatus and the board are fastened in the sticking manner. This solution is easy to operate and is simple and convenient.

With reference to the second aspect, in some implementations of the second aspect, the board includes a fastening structure that is in a protruding shape on both the inner surface of the panel of the board and an outer surface of the panel of the board. A part protruding from the outer surface of the panel is used for a handheld part when the board is inserted into the device. That the indicator apparatus is fastened to the board includes that the indicator apparatus is tightly fastened to the board by using a part protruding from the inner surface of the panel. An existing part of the board is used to further tightly fasten the indicator apparatus to the board, to further improve fastening strength of the indicator apparatus.

According to a third aspect, an embodiment of this application provides a communication system. The system includes at least one device according to any one of the second aspect or the possible implementations of the second aspect.

### BRIEF DESCRIPTION OF DRAWINGS

FIG. 1 shows two common light guiding solutions using board indicators;
FIG. 2 is a diagram of a hardware structure of a possible OTN device 200 to which an embodiment of an indicator apparatus according to this application is applicable;
FIG. 3 is a diagram of a structure of a first plastic structural part 300 according to an embodiment of this application;
FIG. 4 is a top view of the plastic structural part 300;
FIG. 5 is a diagram of a structure of a second plastic structural part 500 according to an embodiment of this application;
FIG. 6 is a diagram of a structure of a third plastic structural part 600 according to an embodiment of this application;
FIG. 7 is a top view of the plastic structural part 600;
FIG. 8 is a main view of the plastic structural part 600;
FIG. 9 is a main view of a first surface 911 of an indicator board 900 according to an embodiment of this application;
FIG. 10 is a side view of the indicator board 900;
FIG. 11 is a main view of a second surface 912 of the indicator board 900;
FIG. 12 is a diagram of a structure of an indicator apparatus 1200 according to an embodiment of this application;
FIG. 13 is a diagram of installing the plastic structural part 600 on a board 1300;
FIG. 14 is a diagram of installing the indicator apparatus 1200 in an OTN device 1400; and
FIG. 15 shows four indicator states and a position of an indicator on a panel of a board.

### DESCRIPTION OF EMBODIMENTS

The following describes the technical solutions of this application with reference to the accompanying drawings.

For ease of understanding of embodiments of this application, the following descriptions are provided.

First, in the following text descriptions or accompanying drawings in embodiments of this application, the terms such as "first", "second", and various serial numbers are merely used for differentiation for ease of description, and do not need to be used to describe a specific order or sequence, but are not used to limit the scope of embodiments of this application. For example, different surfaces are distinguished.

Second, in embodiments of this application, the word such as "for example" is for representing an example, an illustration, or a description. Any embodiment or design solution described as "example" or "for example" should not be explained as being more preferred or having more advantages than another embodiment or design solution. The word such as "for example" is used to present a related concept in a specific manner for ease of understanding.

Third, in the descriptions of embodiments of this application, "a plurality of" means two or more, and "at least one" and "one or more" mean one, two, or more. The singular expression forms "one", "a", "the", "the foregoing", "this", and "the one" are also intended to include an expression form such as "one or more", unless the opposite is explicitly indicated in the context thereof.

Fourth, reference to "an embodiment", "some embodiments", or the like described in this specification indicates that one or more embodiments of this application include a specific feature, structure, or characteristic described with reference to embodiments. Therefore, statements such as "in some embodiments" and "in some other embodiments" that appear at different places in this specification do not necessarily mean referring to a same embodiment. Instead, the statements mean "one or more but not all of embodiments", unless otherwise specifically emphasized in another manner.

Fifth, in embodiments of this application, a same reference numeral indicates a same component or a same part. In addition, the parts in the accompanying drawings are not drawn in proportion. Values and sizes of the parts shown in the figures are merely examples, and should not be construed as a limitation on this application.

Sixth, an indicator apparatus provided in this application can be used in any network communication device including a board, for example, an OTN device, an optical access device, or a data communication device (for example, a switch or a router). In the following embodiments of this application, an example in which the indicator apparatus is used in the OTN device is used for description. However, the protection scope of this application is not limited to the OTN device.

Seventh, this application relates to a light pipe. The light pipe is an optical element that transmits light from a light source to another point at a specific distance from the light source with a minimum loss, where the light is transmitted inside the light pipe through total internal reflection.

The following describes the technical solutions of this application with reference to the accompanying drawings.

The indicator apparatus and the board provided in embodiments of this application can be used in the OTN device. FIG. 2 is a diagram of a hardware structure of a possible OTN device 200 to which an embodiment of an indicator apparatus according to this application is applicable. Specifically, the OTN device 200 includes a tributary board 201, a cross-connect board 202, a line board 203, an optical layer processing board (not shown in FIG. 2), and a system control and communication board 204. The indicator apparatus provided in this application may be used in one or more of the tributary board 201, the cross-connect board 202, the line board 203, or the system control and communication board 204 shown in FIG. 2. The OTN device may include different types and different quantities of boards based on a requirement. For example, an OTN device used as a core node includes no tributary board 201. For another example, an OTN device used as an edge node includes a plurality of tributary boards 201, or includes no optical cross-connect board 202. For still another example, an OTN device supporting only an electrical layer function may include no optical layer processing board.

The tributary board 201, the cross-connect board 202, and the line board 203 are configured to process an electrical layer signal of the OTN device. The tributary board 201 is configured to receive and send various client services, for example, a synchronous digital hierarchy (synchronous digital hierarchy, SDH) service, a packet service, an Ethernet service, and a fronthaul service. Further, the tributary board 201 may be divided into a client-side optical transceiver module and a signal processor. The client-side optical transceiver module may also be referred to as an optical transceiver, and is configured to receive and/or send service data. The signal processor is configured to map service data to a data frame and demap the service data from the data frame. The cross-connect board 202 is configured to exchange data frames, to complete exchange of one or more types of data frames. The line board 203 mainly implements processing of a line-side data frame. Specifically, the line board 203 may be divided into a line-side optical module and a signal processor. The line-side optical module may be referred to as an optical transceiver, and is configured to receive and/or send a data frame. The signal processor is configured to multiplex and demultiplex the line-side data frame, or map and demap the line-side data frame. The system control and communication board 204 is configured to implement system control, and specifically, may collect information from different boards, or send a control instruction to a corresponding board. It should be noted that, unless otherwise specified, there may be one or more specific components (for example, signal processors). This is not limited in this application. It should be further noted that a type of a board included in the device, a function design of the board, and a quantity of boards are not limited in this application. It should be noted that during specific implementation, two boards mentioned above may be designed as one board. In addition, the network device may further include a standby power supply, a heat dissipation fan, and the like.

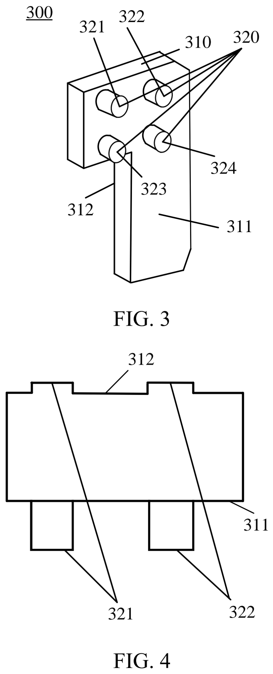

FIG. 3 is a diagram of a structure of a first plastic structural part 300 according to an embodiment of this application. The plastic structural part 300 may be fastened to a corresponding indicator board to form the indicator apparatus provided in embodiments of this application. As shown in FIG. 3, the plastic structural part 300 includes a plastic body 310 (including a first surface 311 and a second surface 312) and a plurality of light guiding structures 320 (a light guiding structure 321, a light guiding structure 322, a light guiding structure 323, and a light guiding structure 324 shown in FIG. 3). The plurality of light guiding structures 320 are configured to transmit, to the first surface 311 of the plastic body 310 for emission, light emitted by a plurality of LEDs on the indicator board.

Optionally, the plurality of light guiding structures may use a plurality of manners including but not limited to the following manners. For example, the plurality of light guiding structures 320 are a plurality of through holes. Alternatively, the plurality of light guiding structures 320 are a plurality of hollow structures, and the plurality of hollow structures protrude from the first surface 311 and the second surface 312 of the plastic body, as shown in a top view in FIG. 4. Alternatively, the plurality of light guiding structures 320 are a plurality of light pipes protruding from the first surface 311 and the second surface 312 of the plastic body, as shown in FIG. 4. Specifically, the plastic structural part 300 may be a structural part integrally formed through an injection molding process. A manner of generating a plastic structural part 300 with a plurality of through holes includes but is not limited to the following manners: For example, the plastic structural part 300 may be generated through one-time molding in an injection mold including a plurality of through holes. Alternatively, a plastic structural part may be generated in an injection mold that does not include a plurality of through holes, and then the plastic structural part 300 with the plurality of through holes is generated through a drilling process. In this case, a material of the plastic structural part 300 may be polycarbonate (polycarbonate, PC). Similarly, a manner of generating a plastic structural part 300 with a plurality of hollow structures includes but is not limited to the following manners: For example, the plastic structural part 300 may be generated through one-time molding in an injection mold including a plurality of hollow structures. Alternatively, a solid plastic structural part may be generated first at a plurality of hollow structures, and then the plastic structural part 300 with the plurality of hollow structures is generated through a drilling process. In this case, a material of the plastic structural part 300 may also be PC. A plastic structural part 300 including a plurality of light pipes may be integrally formed through a two-color injection molding process. Materials of the plastic body 310 and the plurality of light pipes are different. For example, the material of the plastic body 310 is PC, and the material of a light pipe 320 is clear-polycarbonate (clear-polycarbonate, PC_clear) or polymethyl methacrylate (polymethyl methacrylate, PMMA).

It may be understood that, in FIG. 3, the plurality of light guiding structures 320 are shown in a form of the plurality of through holes or the plurality of light pipes, in other words, FIG. 3 does not show an embodiment in which the light guiding structures are the plurality of through holes.

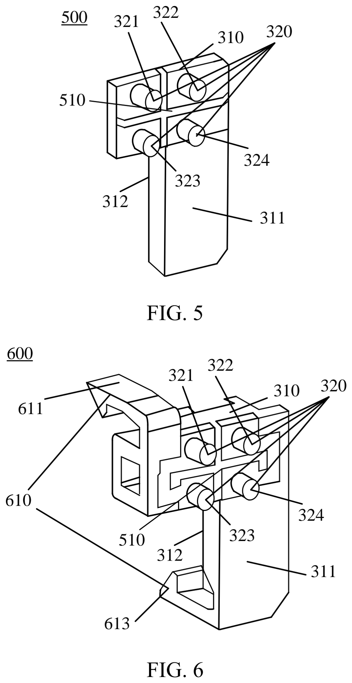

To avoid a light crosstalk phenomenon caused by an excessively small distance between the plurality of light pipes 320 when an indicator is used, FIG. 5 provides a diagram of a structure of a second plastic structural part 500 according to an embodiment of this application. The plastic structural part 500 may be fastened to a corresponding indicator board to form the indicator apparatus provided in embodiments of this application. The plastic structural part 500 includes the plastic body 310 (including the first surface 311 and the second surface 312), the plurality of light guiding structures 320 (the light guiding structure 321, the light guiding structure 322, the light guiding structure 323, and the light guiding structure 324 shown in FIG. 3), and a light isolation structure 510. The light isolation structure 510 is located between the plurality of light pipes 320, and protrudes from the second surface 312 of the plastic body 310. Specifically, the light isolation structure 510 is configured to isolate light emitted from the plurality of light guiding structures 320. For descriptions of other structures in the plastic structural part 500, correspondingly refer to FIG. 3. Details are not described herein again. It may be understood that, when the plastic structural part 500 including the light isolation structure 510 is generated through an injection molding process, an injection mold also need to include a mold part of the light isolation structure 510. In addition, the light isolation structure 510 and the plastic body 310 of the plastic structural part 500 are made of a same material.

It should be noted that FIG. 5 is merely described by using an example in which the light isolation structure 510 protrudes in a "cross" shape. The light isolation structure may alternatively be in another shape, for example, a wave shape. This is not limited in this application.

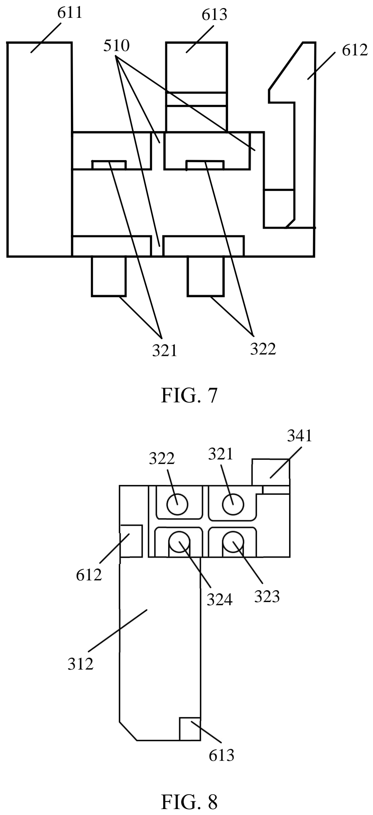

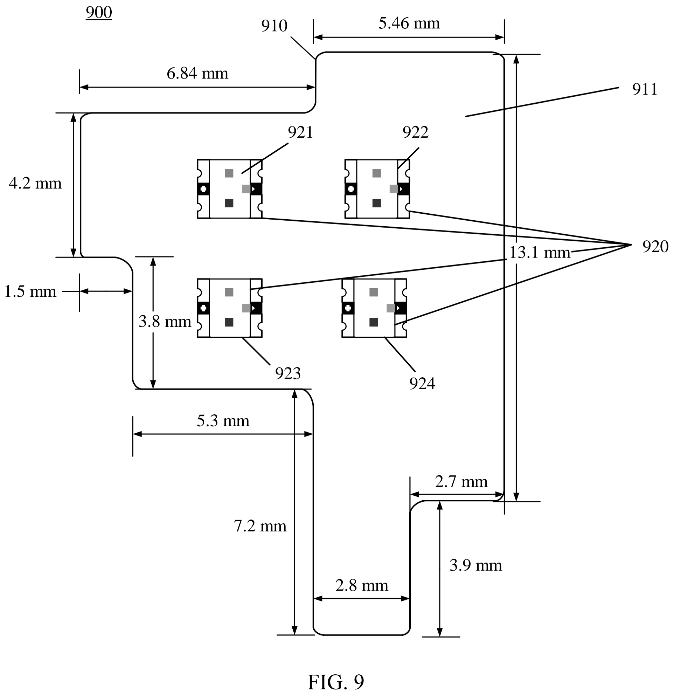

To make a fixed connection between the plastic structural part and the indicator board in the indicator apparatus provided in this application more stable, a plurality of elastic clips may be formed on the plastic structural part that is used together with the indicator board, and the plastic structural part is fastened to the indicator board by using the plurality of elastic clips. FIG. 6 provides a diagram of a structure of a third plastic structural part 600 according to an embodiment of this application. The plastic structural part 600 includes the plastic body 310 (including the first surface 311 and the second surface 312), the plurality of light guiding structures 320 (the light guiding structure 321, the light guiding structure 322, the light guiding structure 323, and the light guiding structure 324 shown in FIG. 3), the light isolation structure 510, and three elastic clips 610 (including an elastic clip 611, an elastic clip 612, and an elastic clip 613. The elastic clip 612 is not shown in FIG. 6, but is shown in a top view in FIG. 7 and a main view in FIG. 8). Specifically, the elastic clip 610 is configured to fasten the plastic structural part 600 to a corresponding indicator board (for example, the indicator board in FIG. 9 below) that is used together. For descriptions of other structures in the plastic structural part 600, correspondingly refer to FIG. 3 and FIG. 5. Details are not described herein again. It may be understood that, when the plastic structural part 600 including the elastic clips 610 is generated through an injection molding process, an injection mold also needs to include mold parts of the elastic clips 610. In addition, the elastic clips 610 and the plastic body 310 of the plastic structural part 600 are made of a same material.

FIG. 7 and FIG. 8 are respectively the top view and the main view of the plastic structural part 600. As shown in FIG. 7 and FIG. 8, the three elastic clips protrude from the second surface of the plastic structural part, and are respectively located on three edges of the plastic body 310. It may be understood that FIG. 6 to FIG. 8 are described by using merely an example in which the plastic structural part includes three elastic clips. In some other embodiments, the plastic structural part may further include another quantity of elastic clips. For example, when an area of the indicator board is large, the plastic structural part may include more (for example, four or five) elastic clips, to ensure a stable connection to the indicator board. When an area of the indicator board is small, the plastic structural part may include fewer (for example, two) elastic clips, to ensure easy disassembly from the indicator board.

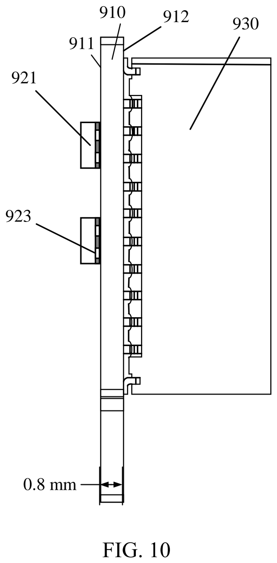

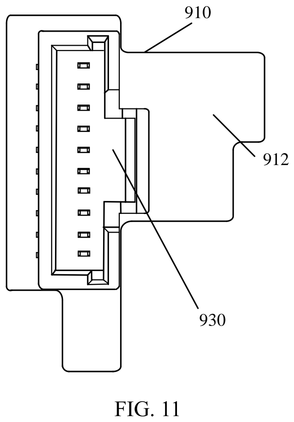

FIG. 9 is a main view of a first surface 911 of an indicator board 900 according to an embodiment of this application. It may be understood that the indicator board 900 and the plastic structural part 300, the plastic structural part 500, and the plastic structural part 600 may separately form different indicator apparatuses. In other words, the plastic structural part 300, the plastic structural part 500, or the plastic structural part 600 may be used as a structural part that is used together with the indicator board 900. The indicator board 900 includes a PCB 910, a plurality of LEDs 920 (an LED 921, an LED 922, an LED 923, and an LED 924 shown in FIG. 9) disposed on the first surface 911 of a PCB 910, and an indicator board base 930 disposed on a second surface 912 of the PCB 910 (as shown in a side view of the indicator board 900 in FIG. 10 and a main view of the second surface 912 of the indicator board 900 in FIG. 11 below).

It should be noted that, when the indicator board 900 is used together with the plastic structural part 300 or the plastic structural part 500, in some embodiments, the first surface 911 of the PCB 910 and the second surface 312 of the plastic body 310 are fastened through glue dispensing; or in some other embodiments, the first surface 911 of the PCB 910 and the second surface 312 of the plastic body 310 are fastened by using a screw, and in this case, the PCB 910 and the plastic body 310 are further provided with a through hole for installing and fastening the screw. When the indicator board 900 is used together with the plastic structural part 600, the first surface 911 of the PCB 910 and the second surface 312 of the plastic body 310 are fastened by using the three elastic clips 610 in FIG. 6.

It may be understood that, a fastening manner implemented through glue dispensing makes it difficult to disassemble the indicator board 900 and the plastic structural part 300 (or the plastic structural part 500). Therefore, the fastening manner implemented through glue dispensing may be used in some scenarios in which the indicator board 900 and the plastic structural part 300 (or the plastic structural part 500) do not need to be disassembled. In addition, although the PCB 910 and the plastic body 310 can be easily disassembled and installed by using the screw for fastening, because a position of a threaded through hole of the screw needs to be reserved on the PCB 910 and the plastic body 310, this solution may be applied to a scenario in which the area of the indicator board is large. For a manner in which the PCB 910 and the plastic body 310 are fastened by using the elastic clips 610, the method can make the indicator board 900 easy to assemble, and make the PCB 910 and the plastic body 310 easy to disassemble.

In addition, in the foregoing embodiment, only a case in which the indicator board includes four LED lamps and the corresponding plastic structural part 600 includes four light pipes is described. The protection scope of this application is not limited thereto. In other words, there may be one or more LED lamps on the indicator board provided in this application, and there may be one or more light guiding structures (for example, light pipes) on the plastic structural part. In other words, the indicator board provided in this application may further include another quantity of LED lamps, and a quantity of light pipes on the plastic structural part is not limited to 4. It should be further noted that, in the solution of this application, the quantity of LED lamps included in the indicator board may be different from the quantity of light pipes on the plastic structural part that is used together. For example, the quantity of LED lamps included in the indicator board may be less than the quantity of light pipes on the plastic structural part. In this case, a light pipe that is not used together with the LED lamp no longer emits light. In addition, FIG. 9 further shows a value of each edge length of the indicator board 900, and FIG. 10 shows a thickness of the indicator board 900. It may be understood that designs (including a shape, a value, and the like) of the indicator board and the plastic structural part provided in this application may be flexibly designed based on a use requirement. Therefore, the value of each edge length of the indicator board 900 and the thickness of the indicator board 900 shown in FIG. 9 and FIG. 10 are merely examples provided in this application.

The following describes an indicator provided in embodiments of this application and a method for installing the indicator on a board.

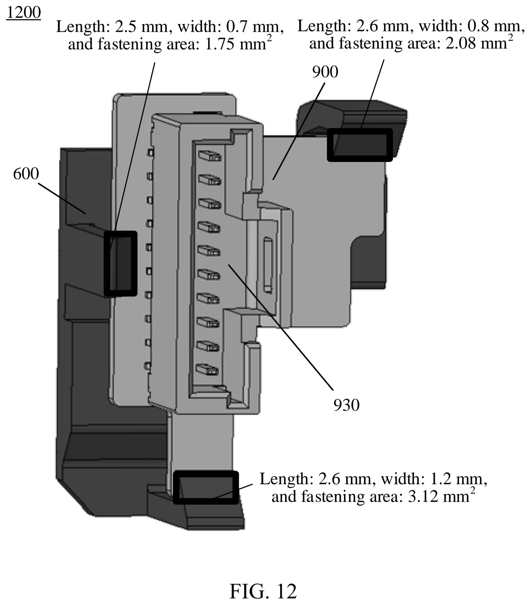

FIG. 12 is a diagram of a structure of an indicator apparatus 1200 according to an embodiment of this application. FIG. 12 is described by using the plastic structural part 600 shown in FIG. 6 and the indicator board 900 shown in FIG. 9 as an example. Specifically, the indicator apparatus 1200 includes four LED lamps, the plastic structural part 600 and the indicator board 900 are fastened together by using three elastic clips, and fastening areas of the three elastic clips are 2.08 mm², 1.75 mm², and 3.12 mm² respectively.

It may be understood that FIG. 12 is merely an example of the indicator apparatus provided in this application. A corresponding customized design of the indicator apparatus provided in this application may be provided based on a requirement of an application. Therefore, in another embodiment, values of edge lengths of the indicator board may be different from those shown in FIG. 12, the thickness of the indicator board may be correspondingly reduced or increased based on a cabling requirement, and a shape of the indicator board may be different from that in the foregoing embodiment.

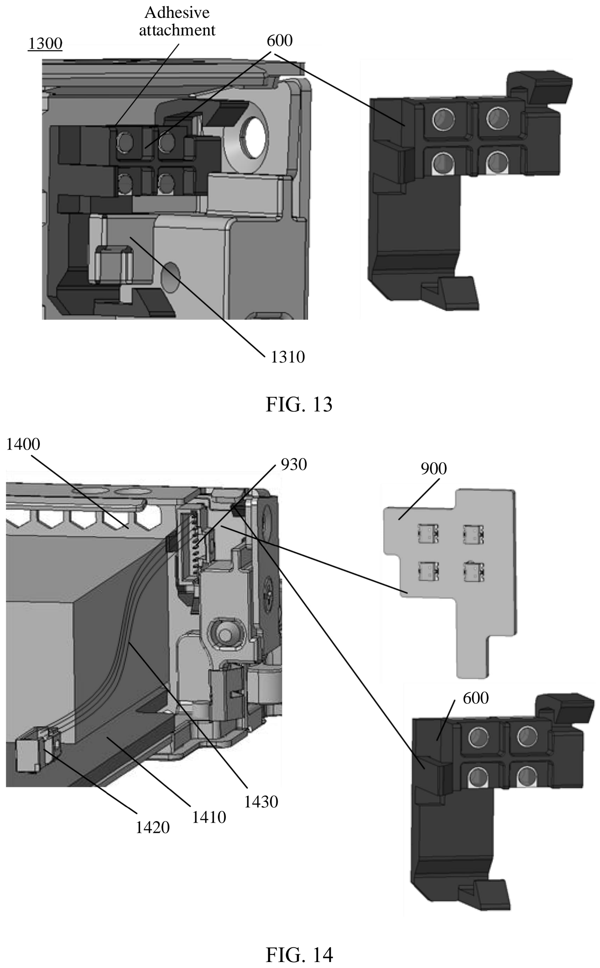

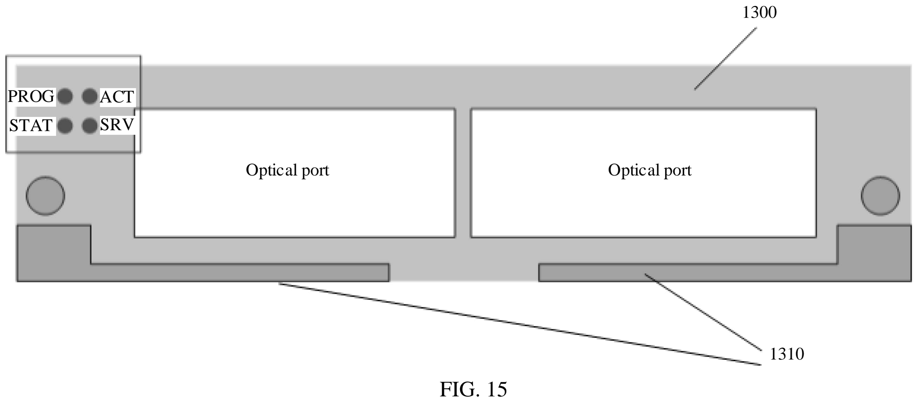

FIG. 13 is a diagram of installing the plastic structural part 600 on a board 1300. Specifically, the first surface 311 of the plastic body 310 is fastened to an inner surface of a panel of the board 1300 in a sticking manner (for example, by using glue), and is tightly fastened to the board 1300 by using a fastening structure 1310 in the board 1300. The fastening structure 1310 protrudes toward the inner surface of the panel of the board 1300 and an outer surface of the panel of the board 1300 respectively. A part protruding from the outer surface of the panel of the board 1300 is used as a handheld part (as shown in a diagram of the panel of the board in FIG. 15 below) when an operator inserts the board 1300 into a slot of an OTN device. A part protruding from the inner surface of the board 1300 is a part that tightens plastic structural part 600.

FIG. 14 is a diagram of installing the indicator apparatus 1200 in an OTN device 1400. The indicator board base 930 of the indicator apparatus 1200 is connected to a connection base 1420 on a PCB 1410 of the OTN device 1400 through a cable 1430, so that four indicators implement different states by receiving instructions of the OTN device 1400, for example, four indication states shown in FIG. 15: a hardware state (STAT), a software state (PROG), a service alarm indication (SRV), and a service activation state (ACT). It may be understood that FIG. 14 is merely a diagram of a partial structure of the OTN device. The OTN device 1400 further includes another structure such as an optical module (where FIG. 15 below further shows that an interface, that is, an optical port, of the optical module further exists on the panel of the board 1300). This is not limited and described in this application. In addition, usually, according to a visual habit, human eyes can easily notice an indicator in an upper left corner of a board. Therefore, FIG. 15 is merely described by using an example in which the indicator is located in an upper left corner of the board 1300. In another embodiment, the indicator apparatus may alternatively be located at another position of the board. This is not limited in this application.

It should be noted that, when the indicator apparatus 1200 is installed in the OTN device, a length, a width, and a height of internal space of the OTN device occupied by the indicator apparatus 1200 are 16.4 mm, 11.3 mm, and 17.6 mm respectively. In addition, after the indicator apparatus 1200 is installed, a size of the indicator apparatus is 3.2 cm³. It may be understood that, because the size of the indicator apparatus in this application may be smaller, in some embodiments, the size of the indicator apparatus is less than 3.2 cm³. In some other embodiments, a height of the indicator apparatus is less than 17.6 mm.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An indicator apparatus, comprising a plastic structural part and an indicator board, wherein the plastic structural part is fastened to the indicator board;
the plastic structural part is a structural part integrally formed by a plurality of light guiding structures and a plastic body, and the plurality of light guiding structures are configured to transmit, to a first surface of the plastic body for emission, light emitted by a plurality of light emitting diodes LEDs on the indicator board; and
the indicator board comprises a printed circuit board PCB, the plurality of LEDs disposed on a first surface of the PCB, and an indicator board base disposed on a second surface of the PCB, and the indicator board base is electrically connected to a board by using a cable.

2. The indicator apparatus according to claim 1, wherein the plurality of light guiding structures are a plurality of through holes.

3. The indicator apparatus according to claim 1, wherein the plurality of light guiding structures are a plurality of hollow structures protruding from the first surface and a second surface of the plastic body.

4. The indicator apparatus according to claim 1, wherein the plurality of light guiding structures are a plurality of light pipes protruding from the first surface and a second surface of the plastic body.

5. The indicator apparatus according to any one of claims 1 to 4, wherein
the second surface of the plastic body is further formed with a light isolation structure in a protruding shape, the light isolation structure is located between the plurality of light guiding structures, and the light isolation structure is configured to isolate light emitted from the plurality of light guiding structures.

6. The indicator apparatus according to any one of claims 1 to 5, wherein the plastic structural part is further formed with a plurality of elastic clips protruding toward a second surface of the plastic structural part, and that the plastic structural part is fastened to the indicator board comprises that the plastic structural part is fastened to the indicator board by using the plurality of elastic clips.

7. The indicator apparatus according to claim 6, wherein a quantity of the plurality of elastic clips is 3, and the plurality of elastic clips are respectively formed on three edges of the plastic body.

8. The indicator apparatus according to claim 7, wherein a size of the indicator apparatus is less than or equal to 3.2 cm³.

9. The indicator apparatus according to claim 7 or 8, wherein a height of the indicator apparatus is less than or equal to 17.6 mm.

10. A network communication device, comprising a board and the indicator apparatus according to any one of claims 1 to 10, wherein the indicator apparatus is fastened to the board.

11. The network communication device according to claim 10, wherein that the indicator apparatus is fastened to the board comprises that a first surface of the plastic structural part of the indicator apparatus is fastened to an inner surface of a panel of the board in a sticking manner.

12. The network communication device according to claim 10 or 11, wherein the board comprises a fastening structure that is in a protruding shape on both the inner surface of the panel of the board and an outer surface of the panel of the board, a part protruding from the outer surface of the panel is used for a handheld part when the board is inserted into the device, and that the indicator apparatus is fastened to the board comprises that the indicator apparatus is tightly fastened to the board by using a part protruding from the inner surface of the panel.
